# EUROPÄISCHE PATENTSCHRIFT

(11) **EP 2 382 110 B1**
(45) Veröffentlichungstag und Bekanntmachung des Hinweises auf die Patenterteilung: **19.03.2014**
(21) Anmeldenummer: 10701473.0
(22) Anmeldetag: 22.01.2010
(51) Int. Cl.: B60R 13/10

(54) **KENNZEICHEN, VORZUGSWEISE KRAFTFAHRZEUGKENNZEICHEN, SOWIE VERFAHREN ZUR HERSTELLUNG DESSELBEN**
NUMBER PLATE PREFERABLY MOTOR VEHICLE NUMBER PLATE AND METHOD FOR PRODUCTION THEREOF
PLAQUE D'IMMATRICULATION, DE PRÉFÉRENCE PLAQUE D'IMMATRICULATION DE VÉHICULE, ET SON PROCÉDÉ DE RÉALISATION

(30) Priorität: 23.01.2009 DE 102009005970
(43) Veröffentlichungstag der Anmeldung: 02.11.2011
(73) Patentinhaber: J.H. Tönnjes E.A.S.T. GmbH & Co. KG, 27751 Delmenhorst (DE)
(72) Erfinder: BEENKEN, Björn, 27777 Ganderkesee-Rethorn (DE); MÖNNING, Dietmar, 26122 Oldenburg (DE)
(74) Vertreter: Möller, Friedrich
(86) Internationale Anmeldenummer: PCT/EP2010/000386
(87) Internationale Veröffentlichungsnummer: WO 2010/084013

(56) Entgegenhaltungen:
- EP-A1- 1 550 991
- WO-A2-2006/136847
- GB-A- 2 276 484
- GB-A- 2 342 629
- US-B1- 7 204 909

## Beschreibung

Die Erfindung betrifft ein Kennzeichen, vorzugsweise ein Kraftfahrzeugkennzeichen, gemäß dem Oberbegriff des Anspruchs 1. Des Weiteren betrifft die Erfindung ein Verfahren zur Herstellung eines Kennzeichens gemäß dem Oberbegriff des Anspruchs 12.

Um Manipulationen und Diebstähle von Kennzeichen, vor allem Kraftfahrzeugkennzeichen, entgegenzuwirken, werden die Kennzeichen mit Sicherheitsmerkmalen, welche in der Branche auch als Originalitätsmerkmale oder Echtheitsmerkmale bezeichnet werden, versehen. Es sind die unterschiedlichsten Arten solcher Sicherheitsmerkmale bekannt. Beispielsweise gibt es Sicherheitszeichen, die als Aufkleber mit mindestens einem Hologramm ausgebildet sind. Solche Sicherheitszelchen werden von außen auf das Kennzeichen aufgeklebt. Hierbei besteht die Gefahr, dass die Aufkleber wieder entfernt werden. Zwar sind solche Sicherheitszeichen so gestaltet, dass sie sich nicht zerstörungsfrei entfernen lassen; jedoch hat es sich gezeigt, dass es Methoden gibt, Sicherheitszeichen manchmal zerstörungsfrei vom Kennzeichen zu entfernen.

Aus der WO 2006/136847 A2 ist ein Kraftfahrzeugkennzeichen bekannt, das einen eine Beschriftung tragenden Kennzeichenkörper aufweist, auf dem eine retroreflektierende Deckschicht angeordnet ist. Der Kennzeichenkörper ist mit einer Ausstanzung versehen, in die ein Sicherheitszeichen eingelegt und eingegossen wird. Durch die Anordnung des Sicherheitszeichens in der Ausstanzung des Kennzeichenkörpers und das Ausgießen des vom Sicherheitszeichen freigelassenen Bereichs der Ausstanzung kann das Sicherheitszeichen von der der Deckschicht abgewandten Rückseite des Kennzeichenkörpers entfernt werden, ohne dass dadurch die sichtbare Deckschicht beeinträchtigt wird.

Dadurch bietet das bekannte Kraftfahrzeugkennzeichen keine ausreichende Sicherheit gegen Manipulationen.

Der Erfindung liegt nun die Aufgabe zugrunde, ein Kennzeichen, vorzugsweise ein Kraftfahrzeugkennzeichen, sowie ein Verfahren zur Herstellung desselben zu schaffen, womit auf einfache Weise die Manipulationssicherheit verbessert wird.

Ein Kennzeichen zur Lösung der Aufgabe weist die Merkmale des Anspruchs 1 auf. Demnach ist vorgesehen, dass das mindestens eine Sicherheitszeichen in den Umrissen des Kennzeichenkörpers des Kennzeichens angeordnet und in der Deckschicht eingebettet ist. Das kann zum einen so geschehen, dass das mindestens eine Sicherheitszeichen sich vollständig im Inneren des Kennzeichenkörpers bzw. der Deckschicht befindet, indem es allseitig vom Material insbesondere der Deckschicht umgeben ist. Zum anderen kann das mindestens eine Sicherheitszeichen aber auch so im Kennzeichenkörper eingebettet sein, dass eine Fläche des jeweiligen Sicherheitszeichens frei liegt, insbesondere bündig mit einer angrenzenden Fläche des Kennzeichenkörpers abschließt. Dann sind eine gegenüberliegende Fläche und die Seitenflächen des jeweiligen Sicherheitszeichens vom Material des Kennzeichenkörpers umgeben. Hierbei liegt praktisch das jeweilige Sicherheitszeichen in einer den Abmessungen desselben entsprechenden Vertiefung oder Ausnehmung des Kennzeichenkörpers, insbesondere seiner Deckschicht. Bei einer solchen Einbettung des mindestens einen Sicherheitszeichen in die Deckschicht braucht letztere nicht transparent zu sein. Dadurch ist das mindestens eine Sicherheitszeichen ganz oder zumindest teilweise im Kennzeichen eingebettet. Beispielsweise ist dadurch das mindestens eine Sicherheitszeichen im Kennzeichen integriert. Es kann dadurch nicht mehr vom Kennzeichen getrennt werden.

Bei einer bevorzugten Ausgestaltung des Kennzeichens mit vollständig im Inneren des Kennzeichenkörpers angeordneten Sicherheitszeichen ist vorgesehen, die Deckschicht aus zwei übereinanderliegenden Deckschichtenlagen zu bilden, wobei das jeweilige Sicherheitszeichen zwischen den Deckschichtenlagen angeordnet ist, indem es allseitig in die Deckschicht eingebettet ist.

Bei einer Einbettung des mindestens einen Sicherheitszeichens in der Deckschicht, sodass eine Fläche des Sicherheitszeichens bündig mit der angrenzenden Fläche der Deckschicht abschließt, kann die freiliegende Fläche des jeweiligen Sicherheitszeichens auf einer sichtbaren Vorderseite der Deckschicht, aber auch auf einer Rückseite der Deckschicht, angeordnet sein. Im letztgenannten Falle ist vorgesehen, dass die vom Material der Deckschicht nicht überdeckte Fläche des jeweiligen Sicherheitszeichens von einer anderen Schicht auf der Rückseite der Deckschicht abgedeckt ist. Bei der bündig mit der Vorderseite der Deckschicht abschließenden freigelassenen Fläche des jeweiligen Sicherheitszeichens kann auch diese überdeckt sein, und zwar entweder durch einen Schutzfilm oder einen Schutzlack auf der Vorderseite der Deckschicht oder eine über der Vorderseite der Deckschicht angeordnete Reflexionsschicht, insbesondere einer retroreflektierenden Folie.

Bei einer bevorzugten Ausgestaltung der Erfindung ist vorgesehen, dass das jeweilige Sicherheitszeichen einen Träger, insbesondere einen plättchenartigen Träger, mit mindestens einem Sicherheitsmerkmal aufweist. Grundsätzlich kann das Sicherheitsmerkmal beliebig ausgestaltet sein. Bevorzugt ist aber vorgesehen, das Sicherheitsmerkmal als mindestens ein Hologramm auszubilden. Es ist aber auch denkbar, dass das Hologramm das gesamte Sicherheitszeichen bildet. Bei einem solchen Sicherheitszeichen, das als Hologramm ausgebildet ist oder mindestens ein Hologramm aufweist, führt die Anordnung in den Umrissen insbesondere der Deckschicht, vor allem die teilweise oder vollständige Einbettung und/oder Integration in die Deckschicht zu einem Kennzeichen, insbesondere einem Kraftfahrzeugkennzeichen, das nicht manipulierbar ist.

Ein Verfahren zur Lösung der eingangs genannten Aufgabe weist die Merkmale des Anspruchs 12 auf. Bei diesem Verfahren wird das Kennzeichen, insbesondere Kraftfahrzeugkennzeichen, durch Eingießen und Einbetten in die Deckschicht mit dem mindestens einen Sicherheitszeichen versehen. Das kann in besonders einfacher Weise bei der Herstellung der Deckschicht geschehen. Das jeweilige Sicherheitszeichen dient dabei praktisch als "verlorene Schalung" bei der durch Gießen erfolgenden Herstellung der Deckschicht.

Bei einer bevorzugten Weiterbildung des Verfahrens ist vorgesehen, das jeweilige Sicherheitszeichen zwischen zwei Lagen der Deckschicht einzubetten. Dazu wird eine erste Lage der Deckschicht gegossen, auf diese das mindestens eine Sicherheitszeichen aufgelegt und anschließend die zweite Lage der Deckschicht über die erste Lage und das Sicherheitszeichen gegossen wird. Das jeweilige Sicherheitszeichen kann schon vor dem vollständigen Aushärten der ersten Lage der Deckschicht aufgelegt werden. Die erste Lage der Deckschicht braucht auch noch nicht ausgehärtet zu sein, wenn die zweite Lage der Deckschicht auf die erste Lage aufgegossen wird. Dann wird die zweite Lage sozusagen "nass in nass" auf die erste Lage aufgebracht und dadurch eine homogene Verbindung beider Lage der Deckschicht herbeigeführt. Dadurch wird eine irreversible vollständige Einbettung des mindestens einen Sicherheitszeichens in die Deckschicht herbeigeführt, wodurch das mindestens eine Sicherheitszeichen körperlich und mechanisch in die Deckschicht integriert ist.

Bevorzugte Ausführungsbeispiele der Erfindung werden nachfolgend anhand der Zeichnung näher erläutert. In dieser zeigen:
- Fig. 1: einen perspektivischen Ausschnitt aus einem Kennzeichen mit stark vergrößerten Dicken der einzelnen Schichten desselben,
- Fig. 2: einen Querschnitt durch ein zweites Ausführungsbeispiel des Kennzeichens mit wiederum stark vergrößerten Dicken der einzelnen Schichten,
- Fig. 3: einen Querschnitt durch ein drittes Ausführungsbeispiel des Kennzeichens analog zur Fig. 2, und
- Fig. 4: einen Querschnitt durch ein viertes Ausführungsbeispiel eines Kennzeichens mit wiederum stark vergrößerten Dicken der einzelnen Schichten.

In den Figuren ist nur ein Teil verschiedener Ausführungsbeispiele eines Kennzeichens, und zwar insbesondere eines Kraftfahrzeugkennzeichens, gezeigt. Das Kennzeichen besteht größtenteils aus Kunststoff. Dazu ist ein vorzugsweise flexibler Kennzeichenkörper 10 aus mehreren Lagen bzw. Schichten gebildet. Der Kennzeichenkörper 10 ist mit einer individuellen Beschriftung versehen, die vorzugsweise auf eine die Vorderseite des Kennzeichens bildende Vorderfläche 11 des Kennzeichenkörpers 10 aufgedruckt ist. Die Beschriftung kann aber auch aus aufgeklebten Ziffern oder sonstigen Darstellungen gebildet sein.

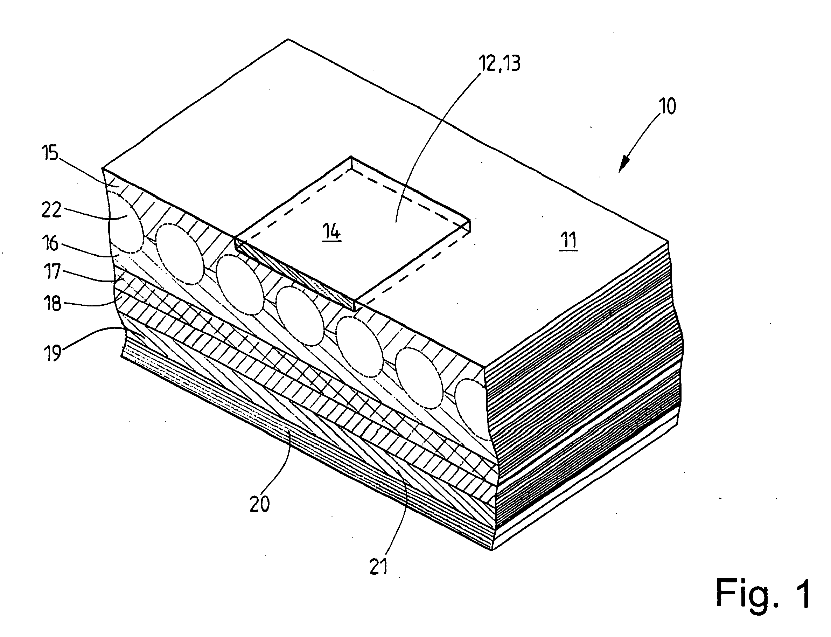

Des Weiteren verfügt das Kennzeichen über ein sogenanntes Sicherheitsmerkmal, das im gezeigten Ausführungsbeispiel als ein plättchenartiges Sicherheitszeichen 12 ausgebildet ist. Gegebenenfalls kann das Kennzeichen auch mehrere Sicherheitszeichen 12 aufweisen. Das Sicherheitszeichen 12 kann beliebige Abmessungen und Grundflächen aufweisen. Im gezeigten Ausführungsbeispiel (Fig. 1) weist das Sicherheitszeichen 12 eine rechteckförmige Grundfläche auf. Das Sicherheitszeichen 12 wird gebildet aus einem ihm die plättchenförmige Gestalt gebenden Träger 13 und mindestens ein in den Figuren nicht gezeigtes Hologramm oder ein sonstiges Sicherheitsmerkmal. Das Sicherheitszeichen 12 kann auch mehrere verschiedenartige Sicherheitsmerkmale aufweisen.

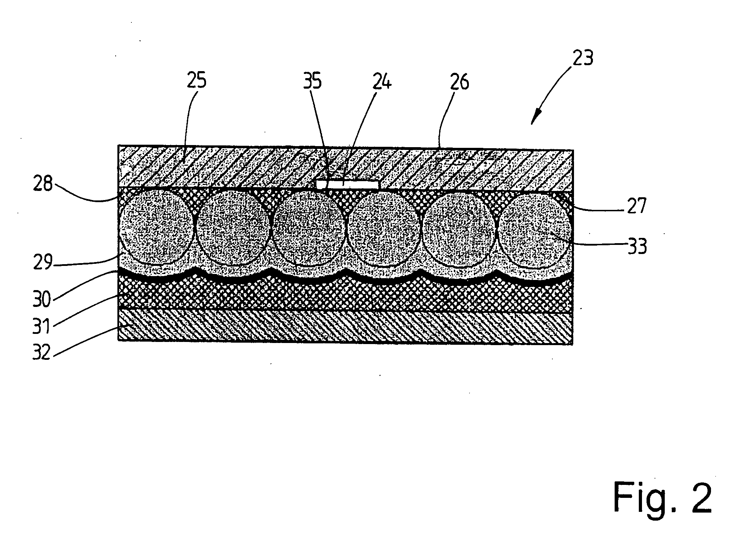

Erfindungsgemäß ist vorgesehen, das mindestens eine Sicherheitszeichen 12 so dem Kennzeichenkörper 10 zuzuordnen, insbesondere im Kennzeichenkörper 10 unterzubringen, dass es in den Umrissen des Kennzeichenkörpers 10 liegt. Demzufolge steht das Sicherheitszeichen 12 im Gegensatz zu aufgeklebten Sicherheitszeichen gegenüber keiner Fläche des Kennzeichenkörpers 10 vor. Bevorzugt ist das mindestens eine Sicherheitszeichen 12 in den Kennzeichenkörper integriert, und zwar insbesondere so, dass es in den Kennzeichenkörper 10 eingebettet ist, sich also ganz im Inneren des Kennzeichenkörpers 11 befindet, indem es vollständig vom Material des Kennzeichenkörpers umgeben ist (Fig. 2 bis 4) oder eine sichtbare Fläche 14 des Sicherheitszeichens 12 bündig mit der Vorderfläche 11 des Kennzeichenkörpers 10 abschließt und somit die einen Teil der Vorderfläche 11 des Kennzeichens bildende Fläche 14 des Sicherheitskennzeichens 12 nicht vom Material des Kennzeichenkörpers 10 umgeben bzw. überdeckt ist (Fig. 1).

Die Fig. 1 zeigt perspektivisch einen Ausschnitt des Kennzeichens mit einem Teil des Kennzeichenkörpers 10 und des in den Umrissen desselben angeordneten Sicherheitszeichens 12. Der Kennzeichenkörper 10 des Kennzeichens weist eine die sichtbare Vorderfläche 11 des Kennzeichens bildende Deckschicht 15, eine dahinterliegende Zwischenschicht 16, eine Reflexionsschicht 17, eine Trägerschicht 18, eine Klebstoffschicht 19 und ein Schutzpapier 20 auf der Rückseite 21 des Kennzeichenkörpers 10 auf. Das Schutzpapier 20 wird zum Aufkleben des Kennzeichens auf beispielsweise ein Karosserieteil eines Fahrzeugs entfernt, so dass es nicht zum Kennzeichenkörper 10 gehört. In der Deckschicht 15 und der Zwischenschicht 16 sind beim in der Fig. 1 gezeigten Kennzeichenkörper 10 Reflexionsmittel eingebettet, bei denen es sich im gezeigten Ausführungsbeispiel um Glaskugeln 22 handelt. Die Glaskugeln 22 sind zwischen der Deckschicht 15 und der Zwischenschicht 16 eingebettet.

In die Vorderfläche 11 der Deckschicht 15 des Kennzeichenkörpers 10 ist im gezeigten Ausführungsbeispiel das Sicherheitszeichen 12 eingelassen. Dabei ist das Sicherheitszeichen 12 der Deckschicht 15 eingebettet, und zwar so, dass die aufrechten Seitenflächen und die zu den Glaskugeln 22 weisende rückseitige Fläche des Sicherheitszeichens 12 vom Material der Deckschicht 15 abgedeckt sind. Hingegen ist die bündig mit der Vorderfläche 11 des Kennzeichens abschließende sichtbare Fläche 14 des Sicherheitszeichens 12 nicht vom Material der Deckschicht 15 bedeckt. Auf diese Weise ist zwar das Sicherheitszeichen 12 in der Deckschicht 15 angeordnet und mit dem Material derselben an den Seitenflächen und der rückseitigen Fläche verbunden, die sichtbare Fläche 14 des Sicherheitszeichens 12 lässt die Deckschicht 15 aber frei. Demzufolge braucht die Deckschicht 15 nicht transparent zu sein, um das Sicherheitszeichen 12 lesen zu können. Weil die sichtbare Fläche 14 durch die Einbettung des Sicherheitszeichens 12 in der Deckschicht 15 mit der Vorderfläche 11 der Deckschicht 15 bündig abschließt, ist ein Trennen des in die Deckschicht 15 eingebetteten Sicherheitszeichens 12 vom Kennzeichen, nämlich dem Kennzeichenkörper 11, ausgeschlossen.

Die vorstehend beschriebene Einbettung des Sicherheitszeichens 12 in den Kennzeichenkörper 10 kann auch bei Kennzeichenkörpern mit einem anderen Aufbau, insbesondere anderen Reflexionskörpern oder gar keinen Reflexionskörpern und weniger Schichten, im einfachsten Falle nur der Deckschicht 15, der Klebstoffschicht 19 und dem Schutzpapier 20, vorgesehen sein.

Die Fig. 2 zeigt ein Kraftfahrzeugkennzeichen mit einem Kennzeichenkörper 23, in den ein Sicherheitszeichen 24 an anderer Stelle eingebettet ist. Der Kennzeichenkörper 23 verfügt über eine durchsichtige, insbesondere klarsichtige, Deckschicht 25 mit einer sichtbaren Vorderfläche 26, die mit einer individuellen Beschriftung versehen ist. Hinter einer rückseitigen Fläche 27 der Deckschicht 25 befindet sich eine Haftlackschicht 28, dahinter eine Distanzlackschicht 29, der auf der Rückseite eine Aluminiumbedampfung 30 zugeordnet ist und eine Klebstoffschicht 31, die die Rückseite des Kennzeichenkörpers 23 bildet. Auch bei dem hier gezeigten Kennzeichen ist bis zum Aufkleben des Kennzeichenkörpers 23 auf einen Teil des Kraftfahrzeugs die freie Rückseite der Klebstoffschicht 31 mit einem Schutzpapier 32 oder dergleichen überzogen. Im Kennzeichenkörper 23 sind auch hier Glaskugeln 33, insbesondere Mikroglaskugeln, eingebettet, und zwar zwischen der Haftlackschicht 28 und der Distanzlackschicht 29.

Beim Kennzeichenkörper 23 ist das Sicherheitszeichen 24, das vorzugsweise als ein Hologramm, insbesondere ein dem Träger 13 zugeordnetes Hologramm, ausgebildet ist, auch in der Deckschicht 25 angeordnet. Beim gezeigten Kennzeichen befindet sich das Sicherheitszeichen 24 in der rückseitigen Fläche 27 der Deckschicht 25, die an der Haftlackschicht 28 angrenzt. Das Sicherheitszeichen 24 ist in der Deckschicht 25 eingebettet, wobei eine hintere Fläche 35 des Sicherheitszeichens 24 bündig mit der rückseitigen Fläche 27 der Deckschicht 25 abschließt. Diese von der Deckschicht 25 nicht überdeckte Fläche 35 ist abgedeckt von der Haftlackschicht 28. Somit ist beim gezeigten Kennzeichen das Sicherheitszeichen 24 vollständig abgedeckt von der Deckschicht 25 einerseits und der Haftlackschicht 28 andrerseits. Damit das hinter der Vorderfläche 26 der Deckschicht 25 liegende Sicherheitszeichen 24 von der Vorderseite des Kennzeichens sichtbar ist, besteht die Deckschicht 25 aus einem vollständig durchsichtigen, insbesondere transparenten, Material, insbesondere Kunststoff.

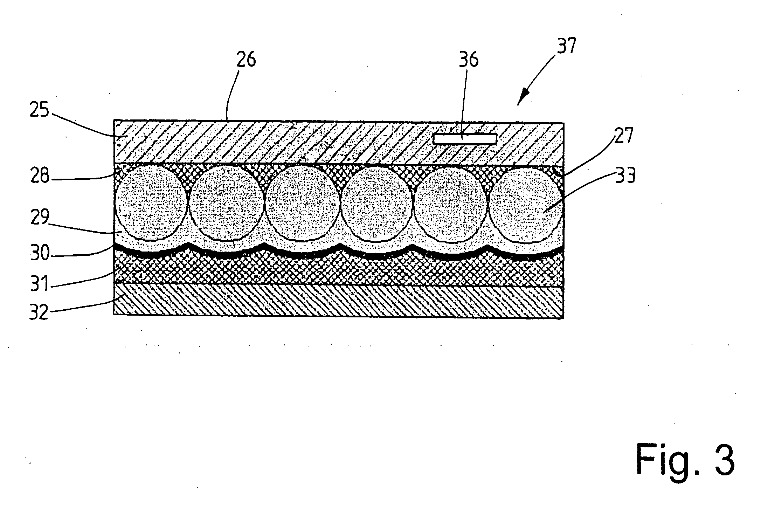

Die Fig. 3 zeigt ein Kennzeichen mit einem Kennzeichenkörper 37, der über den gleichen Aufbau wie der Kennzeichenkörper 23 der Fig. 2 verfügt. Für solche Teile des Kennzeichenkörpers 37, die dem Kennzeichenkörper 23 der Fig. 2 entsprechen, werden deshalb die gleichen Bezugsziffern verwendet.

Im Kennzeichenkörper 37 befindet sich ein Sicherheitszeichen 36, dass wie das Sicherheitszeichen 24 ausgebildet sein kann. Das Sicherheitszeichen 36 befindet sich auch vollständig innerhalb des Kennzeichenkörpers 37, wobei im gezeigten Ausführungsbeispiel (Fig. 3) das Sicherheitszeichen 36 vollständig im Inneren der Deckschicht 25 untergebracht ist. Das Sicherheitszeichen 36 ist beim Kennzeichenkörper 37 der Fig. 3 vollständig vom Material der Deckschicht 25 umgeben, indem das Sicherheitszeichen 36 im Inneren der Deckschicht 25 mit Abstand unter der Vorderfläche 26 desselben angeordnet ist. Ebenso ist das Sicherheitszeichen 36 von der rückseitigen Fläche 27 der Deckschicht 25 beabstandet. Im gezeigten Ausführungsbeispiel befindet sich das Sicherheitszeichen 36 außermittig in der Deckschicht 25, wobei der Abstand des Sicherheitszeichens 36 von der Vorderfläche 26 geringer ist als von der rückseitigen Fläche 27 der Deckschicht 25. Das Sicherheitszeichen 36 kann aber auch mit geringem oder größerem Abstand unter der Vorderfläche 26 der Deckschicht 25 angeordnet sein, und zwar jeweils so, dass das Sicherheitszeichen 36 allseitig vom Material der Deckschicht 25 umgeben ist.

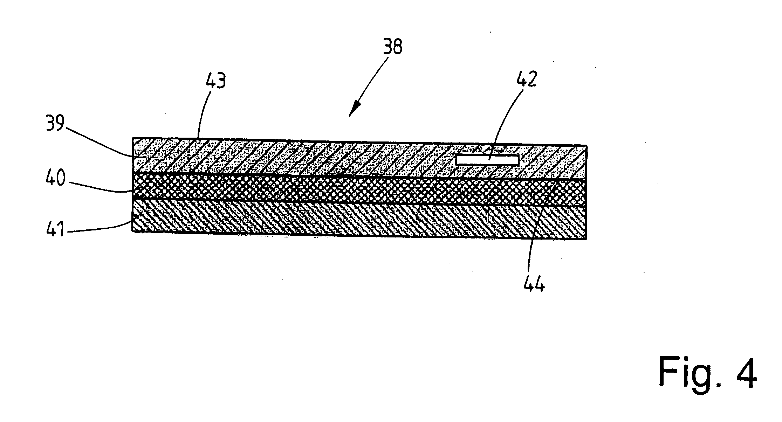

Die Fig. 4 zeigt ein weiteres Ausführungsbeispiel eines Kennzeichens, dessen Kennzeichenkörper 38 über einen vereinfachten Aufbau verfügt. Dieser Kennzeichenkörper 38 weist nur eine mit einer Beschriftung versehene vordere transparente, vorzugsweise klarsichtige, Deckschicht 39 und eine dahinter angeordnete Klebstoffschicht 40, insbesondere eine Haftklebstoffschicht, auf. Hinter der Klebstoffschicht 40 ist ein Schutzpapier 41 vorgesehen, das vor dem Aufkleben des Kennzeichens auf einen Teil eines Fahrzeugs entfernt wird.

Das Sicherheitszeichen 42 ist beim gezeigten Kennzeichen vollständig in die Deckschicht 39 eingebettet, indem es sich zwischen der Vorderfläche 43 und der rückseitigen Fläche 44 befindet. Das Sicherheitszeichen 42 kann aber auch an einer anderen Stelle als in der Fig. 4 gezeigt in der Deckschicht 39 eingebettet sein, und zwar insbesondere so, dass eine Fläche des Sicherheitszeichens 42 bündig mit der Vorderfläche 43 oder der rückseitigen Fläche 44 der Deckschicht 39 abschließt, sowie es in den Ausführungsbeispielen der Fig. 1 und 2 gezeigt ist.

Das in der Fig. 4 gezeigte Kennzeichen kann auch einen Kennzeichenkörper 38 aufweisen, dessen Vorderfläche 43 mit einer reflektierenden Beschichtung, insbesondere einer Reflexfolie, überdeckt ist. Bei einer bündig mit der Vorderfläche 43 der Deckschicht 39 abschließenden Fläche des Sicherheitszeichens 42 wird diese Fläche des Sicherheitszeichens 42 dann von der Reflexfolie überdeckt.

Die Erfindung eignet sich auch für beliebig anders aufgebaute Kennzeichenkörper, insbesondere solche, die an der Stelle der Glaskugeln 22 bzw. 33 ein Raster von Prismen, insbesondere Mikroprismen, aufweisen.

Das erfindungsgemäße Verfahren wird nachfolgend unter Bezugnahme auf die Fig. 1 bis 3 näher erläutert:

Das jeweilige Sicherheitszeichen 12, 24 bzw. 36 wird jeweils in die Deckschicht 15 bzw. 25 integriert, indem es in die Deckschicht 15 bzw. 25 eingegossen wird. Beim Kennzeichenkörper 10 wird das Sicherheitszeichen 12 an geeigneter Stelle auf eine feste Unterlage, auf die das Material der Deckschicht 15 aufgegossen wird, aufgelegt. Danach wird das Material der Deckschicht 15 auf die Unterlage aufgebracht und dabei das Sicherheitszeichen 12 vom Material der Deckschicht 15 übergossen. Dabei kommt es zur Einbettung des Sicherheitszeichens 12 in die Deckschicht 15, wobei durch die auf der Auflage aufliegende Fläche 14 des Sicherheitszeichens 12 bündig mit der auf die Unterlage aufgegossenen Vorderfläche 11 der Deckschicht 15 abschließt.

Beim Kennzeichen mit dem Kennzeichenkörper 23 der Fig. 2 wird das Material der Deckschicht 25 vollflächig auf eine feste Unterlage aufgetragen, und zwar bis zu einer vorgesehenen Schichtdicke. Anschließend wird in die noch nicht ausgehärtete Deckschicht 25 das Sicherheitszeichen aufgelegt und in das noch flüssige Material der Deckschicht 25 eingedrückt, so dass die hintere Fläche 35 des Sicherheitszeichens 24 bündig mit der rückseitigen Fläche 27 der Deckschicht 25 abschließt.

Zur Herstellung des Kennzeichens mit dem Kennzeichenkörper 37 der Fig. 3 wird so vorgegangen, dass die Deckschicht 25 in zwei Schritten gegossen wird. Dazu wird die Deckschicht 25 des Kennzeichenkörpers 37 aus zwei Lagen gebildet, wobei das Sicherheitszeichen 36 zwischen den Lagen angeordnet und dadurch vollständig in der Deckschicht 25 eingebettet wird. Zu diesem Zweck wird zunächst auf eine feste, ebene Unterlage ein erster Teil, nämlich eine Lage, der Deckschicht 25 aufgegossen. Auf diese erste Lage wird im noch mindestens teilweise flüssigen Zustand des Materials der Deckschicht 25 das Sicherheitszeichen 36 aufgelegt. Anschließend wird der zweite Teil, nämlich die zweite Lage, der Deckschicht 25 auf die erste Lage aufgegossen. Auf diese Weise wird das Sicherheitszeichen 36 vollständig zwischen den beiden nacheinander hergestellten Lagen der Deckschicht 25 eingebettet. Die unterschiedlichen Lagen zur Bildung der Deckschicht 25 werden nass auf nass übereinandergegossen, so dass nach dem Aushärten eine homogene Deckschicht 25 mit eingebettetem Sicherheitszeichen 36 entsteht.

**Bezugszeichenliste**

| | | | |
|---|---|---|---|
| 10 | Kennzeichenkörper | 39 | Deckschicht |
| 11 | Vorderfläche | 40 | Klebstoffschicht |
| 12 | Sicherheitszeichen | 41 | Schutzpapier |
| 13 | Träger | 42 | Sicherheitszeichen |
| 14 | Fläche | 43 | Vorderfläche |
| 15 | Deckschicht | | |
| 16 | Zwischenschicht | | |
| 17 | Reflexionsschicht | | |
| 18 | Trägerschicht | | |
| 19 | Klebstoffschicht | | |
| 20 | Schutzpapier | | |
| 21 | Rückseite | | |
| 22 | Glaskugel | | |
| 23 | Kennzeichenkörper | | |
| 24 | Sicherheitszeichen | | |
| 25 | Deckschicht | | |
| 26 | Vorderfläche | | |
| 27 | rückseitige Fläche | | |
| 28 | Haftlackschicht | | |
| 29 | Distanzlackschicht | | |
| 30 | Aluminiumbedampfung | | |
| 31 | Klebstoffschicht | | |
| 32 | Schutzpapier | | |
| 33 | Glaskugel | | |
| 34 | | | |
| 35 | Fläche | | |
| 36 | Sicherheitszeichen | | |
| 37 | Kennzeichenkörper | | |
| 38 | Kennzeichenkörper | | |

## Patentansprüche

1. Kennzeichen, vorzugsweise Kraftfahrzeugkennzeichen, mit einem eine Beschriftung tragenden Kennzeichenkörper (10, 23, 37, 38) und mindestens einem Sicherheitszeichen (12, 24, 36, 42), wobei das mindestens eine Sicherheitszeichen (12, 24, 36, 42) in den Umrissen des Kennzeichenkörpers (10, 23, 37, 38) angeordnet ist, **dadurch gekennzeichnet, dass** mindestens ein Sicherheitszeichen (12, 24, 36, 42) in einer Deckschicht (15, 25, 39) des Kennzeichenkörpers (10, 23, 37, 38) eingebettet Ist.

2. Kennzeichen nach Anspruch 1, **dadurch gekennzeichnet, dass** das mindestens eine Sicherheitszeichen (12, 24, 36, 42) derart in den Umrissen des Kennzeichenkörpers (10, 23, 37, 38) angeordnet ist, dass es gegenüber den Umrissen des Kennzeichenkörpers (10, 23, 37, 38) nicht vorsteht.

3. Kennzeichen nach Anspruch 1 oder 2, **dadurch gekennzeichnet, dass** das mindestens eine Sicherheitszeichen (12, 24, 36, 42) in dem Kennzeichenkörper (10, 23, 37, 38) eingebettet ist.

4. Kennzeichen nach Anspruch 1, **dadurch gekennzeichnet, dass** das mindestens eine Sicherheitszeichen (12, 24) derart im Kennzeichenkörper (10, 23) oder seiner Deckschicht (15, 25) eingebettet ist, dass eine Fläche (14, 35) des Sicherheitszeichens (12, 24) frei liegt, insbesondere bündig mit einer Fläche des Kennzeichenkörpers (10, 23), insbesondere der Deckschicht (15, 25), abschließt.

5. Kennzeichen nach Anspruch 1, **dadurch gekennzeichnet, dass** das mindestens eine Sicherheitszeichen (36, 42) derart im Kennzeichenkörper (37, 38) eingebettet ist, dass es allseitig vom Kennzeichenkörper (37, 38) umgeben ist und sich vollständig im Inneren des Kennzeichenkörpers (37, 38) befindet.

6. Kennzeichen nach Anspruch 1, **dadurch gekennzeichnet, dass** das mindestens eine Sicherheitszeichen (36, 42) derart in die Deckschicht (25, 39) des Kennzeichenkörpers (37, 38) eingebettet ist, dass es allseitig von der Deckschicht (25, 39) umgeben ist und sich vollständig in der Deckschicht (25, 39) befindet.

7. Kennzeichen nach Anspruch 1, **dadurch gekennzeichnet, dass** das mindestens eine Sicherheitszeichen (36, 42) zwischen zwei Deckschichtlagen zur Bildung der Deckschicht (25, 39) eingebettet ist.

8. Kennzeichen nach Anspruch 1, **dadurch gekennzeichnet, dass** eine von der Deckschicht (25) frei gelassene Fläche (35) des mindestens einen Sicherheitszeichens (24) von einer angrenzenden Schicht auf einer rückseitigen Fläche (27) der Deckschicht (25) abgedeckt ist.

9. Kennzeichen nach Anspruch 1, **dadurch gekennzeichnet, dass** die Deckschicht (15, 25, 39) transparent, insbesondere klarsichtig, ist.

10. Kennzeichen nach Anspruch 1, **dadurch gekennzeichnet, dass** das jeweilige Sicherheitszeichen (12, 24, 36, 42) einen Träger (13) mit mindestens einem Sicherheitsmerkmal aufweist.

11. Kennzeichen nach Anspruch 10, **dadurch gekennzeichnet, dass** das mindestens eine Sicherheitsmerkmal als ein Hologramm ausgebildet ist.

12. Verfahren zur Herstellung eines Kennzeichens mit einem Kennzeichenkörper (10, 23, 37, 38), der aus mindestens einer Deckschicht (15, 25, 39) und wenigstens einer weiteren Schicht gebildet wird und mindestens ein Sicherheitszeichen (12, 24, 36, 42) vorgesehen ist, das in den Kennzeichenkörper (10, 23, 37, 38) eingegossen wird, **dadurch gekennzeichnet, dass** beim Eingießen des mindestens einen Sicherheitszeichens (12, 24, 36, 42) ein Einbetten desselben in die Deckschicht (15, 25, 39) erfolgt.

13. Verfahren nach Anspruch 12, **dadurch gekennzeichnet, dass** das mindestens eine Sicherheitszeichen (12, 24, 36, 42) in eine Deckschicht (15, 25, 39) eingegossen und dazu beim Gießen mindestens eines Teils der Deckschicht (15, 25, 39) in dieselbe eingelegt oder auf dieselben aufgelegt wird.

14. Verfahren nach Anspruch 12 oder 13, **dadurch gekennzeichnet, dass** das jeweilige Sicherheitszeichen (36, 42) zwischen zwei Lagen der Deckschicht (25, 39) eingebettet wird, indem eine erste Lage der Deckschicht (25, 39) gegossen, auf diese das mindestens eine Sicherheitszeichen (36, 42) aufgelegt und anschließend die zweite Lage der Deckschicht (25, 39) über die erste Lage und das Sicherheitszeichen (36, 42) gegossen wird.

## Claims

1. An identification plate, preferably a number plate for a motor vehicle, having an identification plate body (10, 23, 37, 38), which has text provided on it, and at least one security sign (12, 24, 36, 42), with the at least one security sign (12, 24, 36, 42) being arranged within the contours of the identification plate body (10, 23, 37, 38), **characterized in that** at least one security sign (12, 24, 36, 42) is embedded in a cover layer (15, 25, 39) of the identification plate body (10, 23, 37, 38).

2. The identification plate as claimed in claim 1, **characterized in that** the at least one security sign (12, 24, 36, 42) is arranged within the contours of the identification plate body (10, 23, 37, 38) such that it does not protrude with respect to the contours of the identification plate body (10, 23, 37, 38).

3. The identification plate as claimed in claim 1 or 2, **characterized in that** the at least one security sign (12, 24, 36, 42) is embedded in the identification plate body (10, 23, 37, 38).

4. The identification plate as claimed in claim 1, **characterized in that** the at least one security sign (12, 24) is embedded in the identification plate body (10, 23) or its cover layer (15, 25) such that a face (14, 35) of the security sign (12, 24) is exposed, in particular terminates flush with a face of the identification plate body (10, 23), in particular the cover layer (15, 25).

5. The identification plate as claimed in claim 1, **characterized in that** the at least one security sign (36, 42) is embedded in the identification plate body (37, 38) such that it is surrounded on all sides by the identification plate body (37, 38) and is located completely in the interior of the identification plate body (37, 38).

6. The identification plate as claimed in claim 1, **characterized in that** the at least one security sign (36, 42) is embedded in the cover layer (25, 39) of the identification plate body (37, 38) such that it is surrounded on all sides by the cover layer (25, 39) and is located completely in the cover layer (25, 39).

7. The identification plate as claimed in claim 1, **characterized in that** the at least one security sign (36, 42) is embedded between two cover layer plies to form the cover layer (25, 39).

8. The identification plate as claimed in claim 1, **characterized in that** a face (35), which is left free of the cover layer (25), of the at least one security sign (24) is covered by an adjoining layer on a rear face (27) of the cover layer (25).

9. The identification plate as claimed in claim 1, **characterized in that** the cover layer (15, 25, 39) is transparent, in particular clear.

10. The identification plate as claimed in claim 1, **characterized in that** the respective security sign (12, 24, 36, 42) has a carrier (13) with at least one security feature.

11. The identification plate as claimed in claim 10, **characterized in that** the at least one security feature is in the form of a hologram.

12. A method for producing an identification plate having as identification plate body (10, 23, 37, 38), which is formed of at least one cover layer (15, 25, 39) and at least one further layer, and at least one security sign (12, 24, 36, 42) is provided which is moulded into the identification plate body (10, 23, 37, 38), **characterized in that** during the moulding of the at least one security sign (12, 24, 36, 42) it is embedded into the cover layer (15, 25, 39).

13. The method as claimed in claim 12, **characterized in that** the at least one security sign (12, 24, 36, 42) is moulded into a cover layer (15, 25, 39) and, to this end, placed in the cover layer (15, 25, 39) or on the cover layer (15, 25, 39) during moulding of at least one part of the cover layer (15, 25, 39).

14. The method as claimed in claim 12 or 13, **characterized in that** the respective security sign (36, 42) is embedded between two plies of the cover layer (25, 39) by moulding a first ply of the cover layer (25, 39), placing the at least one security sign (36, 42) thereon and subsequently moulding the second ply of the cover layer (25, 39) over the first ply and the security sign (36, 42).

## Revendications

1. Plaquette d'identification, de préférence plaquette d'identification de véhicule automobile, présentant un corps (10, 23, 37, 38) de plaquette d'identification portant une inscription et au moins un caractère sécurisé (12, 24, 36, 42), le ou les caractères sécurisés (12, 24, 36, 42) étant disposés sur le périmètre du corps (10, 23, 37, 38) de la plaquette d'identification,
**caractérisée en ce que**
au moins un caractère sécurisé (12, 24, 36, 42) est incorporé dans une couche de recouvrement (15, 25, 39) du corps (10, 23, 37, 38) de la plaquette d'identification.

2. Plaquette d'identification selon la revendication 1, **caractérisée en ce que** le ou les caractères sécurisés (12, 24, 36, 42) sont disposés sur le périmètre du corps (10, 23, 37, 38) de la plaquette d'identification de telle sorte qu'ils ne débordent pas du périmètre du corps (10, 23, 37, 38) de la plaquette d'identification.

3. Plaquette d'identification selon les revendications 1 ou 2, **caractérisée en ce que** le ou les caractères sécurisés (12, 24, 36, 42) sont incorporés dans le corps (10, 23, 37, 38) de la plaquette d'identification.

4. Plaquette d'identification selon la revendication 1, **caractérisée en ce que** le ou les caractères sécurisés (12, 24) sont incorporés dans le corps (10, 23) de la plaquette d'identification ou dans sa couche de recouvrement (15, 25) de telle sorte qu'une surface (14, 35) du caractère sécurisé (12, 24) reste libre et se raccorde en particulier à chant à la surface du corps (10, 23) de la plaquette d'identification et en particulier de la couche de recouvrement (15, 25).

5. Plaquette d'identification selon la revendication 1, **caractérisée en ce que** le ou les caractères sécurisés (36, 42) sont incorporés dans le corps (37, 38) de la plaquette d'identification de telle sorte qu'ils soient entourés de tous côtés par le corps (37, 38) de la plaquette d'identification et qu'ils soient situés entièrement à l'intérieur du corps (37, 38) de la plaquette d'identification.

6. Plaquette d'identification selon la revendication 1, **caractérisée en ce que** le ou les caractères sécurisés (36, 42) sont incorporés dans la couche de recouvrement (25, 39) du corps (37, 38) de la plaquette d'identification de telle sorte qu'ils soient entourés de tous côtés par la couche de recouvrement (25, 39) et qu'ils soient situés entièrement dans la couche de recouvrement (25, 39).

7. Plaquette d'identification selon la revendication 1, **caractérisée en ce que** le ou les caractères sécurisés (36, 42) sont incorporés entre deux strates de la couche de recouvrement qui forment la couche de recouvrement (25, 39).

8. Plaquette d'identification selon la revendication 1, **caractérisée en ce que** la surface (35) du ou des
caractères sécurisés (24) laissée libre par la couche de recouvrement (25) est recouverte par une couche adjacente de la surface arrière (27) de la couche de recouvrement (25).

9. Plaquette d'identification selon la revendication 1, **caractérisée en ce que** la couche de recouvrement (15, 25, 39) est transparente et en particulier limpide.

10. Plaquette d'identification selon la revendication 1, **caractérisée en ce que** le caractère sécurisé (12, 24, 36, 42) présente un support (13) qui présente au moins une caractéristique de sécurité.

11. Plaquette d'identification selon la revendication 10, **caractérisée en ce que** la ou les caractéristiques de sécurité sont configurées en hologrammes.

12. Procédé de fabrication d'une plaquette d'identification présentant un corps (10, 23, 37, 38) de plaquette d'identification formé d'au moins une couche de recouvrement (15, 25, 39) et d'au moins une autre couche, au moins un caractère sécurisé (12, 24, 36, 42) étant prévu et incorporé dans le corps (10, 23, 37, 38) de la plaquette d'identification,
**caractérisé en ce que**
le ou les caractères sécurisés (12, 24, 36, 42) sont incorporés dans la couche de recouvrement (15, 25, 39) lors de la coulée de ce ou de ces caractères sécurisés.

13. Procédé selon la revendication 12, **caractérisé en ce que** le ou les caractères sécurisés (12, 24, 36, 42) sont coulés dans une couche de recouvrement (15, 25, 39) et **en ce que** dans ce but, lors de la coulée d'au moins une partie de la couche de recouvrement (15, 25, 39), ils sont placés dans cette dernière ou sur cette dernière.

14. Procédé selon les revendications 12 ou 13, **caractérisé en ce que** le caractère sécurisé (36, 42) est incorporé entre deux strates de la couche de recouvrement (25, 39) en coulant une première strate de la couche de recouvrement (25, 39), en plaçant le ou les caractères sécurisés (36, 42) sur cette dernière et en coulant ensuite la deuxième strate de la couche de recouvrement (25, 39) au-dessus de la première strate et du caractère sécurisé (36, 42).
